# EUROPEAN PATENT APPLICATION

(11) **EP 4 683 093 A1**
(43) Date of publication of application: **21.01.2026**
(21) Application number: 24222143.0
(22) Date of filing: 20.12.2024
(51) Int. Cl.: H01M 50/503, H01M 50/505, H01M 50/522

(54) **DEVICE INTERCONNECTION MEMBER**

(30) Priority: 15.07.2024 JP 2024113018
(71) Applicant: Prime Planet Energy & Solutions, Inc., Chuo-ku, Tokyo 103-0022 (JP)
(72) Inventor: UCHIDA, Yozo, Tokyo, 103-0022 (JP); FUJIMURA, Satoshi, Tokyo, 103-0022 (JP)
(74) Representative: Kuhnen & Wacker Patent- und Rechtsanwaltsbüro PartG mbB

(57) **Abstract**

A device interconnection member (1) for connecting a first electrode terminal (120) made of first metal in one power storage device (100) and a second electrode terminal (130) made of second metal in another power storage device (100) includes a first conductive member (10) made of the first metal and to be connected to the first electrode terminal (120), a second conductive member (20) made of the second metal and to be connected to the second electrode terminal (130), a joint portion (5) where a first joined portion (14) of the first conductive member (10) and a second joined portion (24) of the second conductive member (20) are joined, and a resin seal member (30) hermetically sealing the joint portion (5).

## Description

### BACKGROUND

### Technical field

The disclosure relates to a device interconnection member for electrically connecting a first electrode terminal made of first metal in one power storage device and a second electrode terminal made of second metal, different from the first metal, in the other power storage device.

### Related Art

A device interconnection member is known to electrically connect power storage devices, such as batteries or capacitors. A concrete example of the device interconnection member electrically connects a first electrode terminal (e.g., positive terminal) made of first metal (e.g., aluminum) in one of adj acent power storage devices and a second electrode terminal (e.g., negative terminal) made of second metal (e.g., copper) in the other power storage device. Further, this device interconnection member may be formed by joining a first conductive member made of the same metal (e.g., aluminum) as the first electrode terminal and a second conductive member made of the same metal (e.g., copper) as the second electrode terminal. For example, Patent document 1 discloses a busbar for battery pack, in which an aluminum plate and a copper plate are butted against each other and formed as a clad (see FIGs. 4 to 6, paragraph 0026 of Patent document 1).

### Citation List

### Patent Documents

Patent Document 1: WO 2018/155090 A1

### SUMMARY

### Technical Problems

However, when the first conductive member and the second conductive member, which constitute the device interconnection member as above, are made of dissimilar metals, galvanic corrosion can occur in a joint portion where a first joined portion of the first conductive member and the second joined portion of the second conductive member are joined to each other.

The present disclosure has been made to address the above problems and has a purpose to provide a device interconnection member capable of preventing or reducing the occurrence of corrosion in a joint portion of the device interconnection member composed of a first conductive member and a second conductive member, which are made of dissimilar metals and joined to each other, i.e., between a first joined portion of the first conductive member and a second joined portion of the second conductive member.

### Means of Solving the Problems

(1) To achieve the above-mentioned purpose, one aspect of the present disclosure provides a device interconnection member for connecting a first electrode terminal made of first metal in one power storage device and a second electrode terminal made of second metal in another power storage device, the second metal being dissimilar to the first metal, characterized in that the device interconnection member comprises: a first conductive member made of the first metal, and including a first connecting portion to be connected to the first electrode terminal; a second conductive member made of the second metal, and including a second connecting portion to be connected to the second electrode terminal; a joint portion in which a first joined portion of first conductive member and a second joined portion of the second conductive member are joined to each other; and a resin seal member hermetically sealing the joint portion.

In the above-described device interconnection member, the joint portion in which the first joined portion of the first conductive member and the second joined portion of the second conductive member, made of dissimilar metals, are joined together is hermetically sealed with the resin seal member. This configuration can prevent the joint portion from being exposed to air and moisture and reduce the occurrence of corrosion between the first joined portion and the second joined portion.

Examples of the "power storage device" include secondary batteries, such as a lithium-ion secondary battery, sodium-ion secondary battery, and a calcium-ion secondary battery, and capacitors, such as a lithium-ion capacitor.

Examples of a method for joining the first joined portion of the first conductive member and the second joined portion of the second conductive member may include welding, such as laser welding and ultrasonic welding, fastening using bolts and nuts, friction stir welding (FSW), swaging such as TOX clinching (trademark), riveting, joining using plastic deformation. When the first joined portion and the second joined portion are joined by welding, their portions melted and solidified together into an integral portion, which is referred to as a welded portion, correspond to the joint portion. Further, when the first joined portion and the second joined portion are joined by swaging or fastening, for example, their closely-contact portions correspond to the joint portion.

(2) Further, the device interconnection member described in (1) may be configured such that the first conductive member includes a first seal portion located between the first joined portion and the first connecting portion, the first seal portion has a first roughened surface extending over an entire periphery on which first nanocolumns stand numerously, the first nanocolumns having a height of 50 nm or greater and formed by joining first particles derived from the first metal that forms the first conductive member like strings of beads into a column shape, the second conductive member includes a second seal portion located between the second joined portion and the second connecting portion, the second seal portion has a second roughened surface extending over an entire periphery on which second nanocolumns stand numerously, the second nanocolumns having a height of 50 nm or greater and formed by joining second particles derived from the second metal that forms the second conductive member like strings of beads into a column shape, the resin seal member is hermetically joined to the first seal portion by resin material that forms the resin seal member and filled in gaps between the first nanocolumns numerously standing on the first roughened surface, and hermetically joined to the second seal portion by the resin material filled in gaps between the second nanocolumns numerously standing on the second roughened surface, and formed to cover over the first joined portion and the second joined portion.

In the above-described device interconnection member, the first seal portion of the first conductive member is formed with the first roughened surface of a nano level (nano order) on which the first nanocolumns stand numerously, and the second seal portion of the second conductive member is formed with the second roughened surface of a nano level on which the second nanocolumns stand numerously. Further, gaps between the first nanocolumns numerously standing on the first roughened surface are filled with resin material, hermetically joining the resin seal member to the first seal portion, and similarly, gaps between the second nanocolumns numerously standing on the second roughened surface are filled with resin material, hermetically joining the resin seal member to the second seal portion. Thus, the resin seal member covers over the first joined portion and the second joined portion including the joint portion. In this configuration, the first joined portion and the second joined portion including the j oint portion can be entirely covered with the resin seal member with particularly high hermeticity. This can more effectively prevent or reduce corrosion between the first joined portion and the second joined portion.

(3) In the device interconnection member described in (1) or (2), furthermore, the first joined portion of the first conductive member and the second joined portion of the second conductive member may be integrally joined to each other by plastic deformation of at least one of the first joined portion and the second joined portion.

For example, when a first joined portion of a first conductive member and a second joined portion of a second conductive member, made of dissimilar metals, are joined together by welding, hard and brittle intermetallic compounds may be generated in a welded portion formed by melted and integrally solidified portions of the first and second joined portions. This may cause the welded portions to break or fracture in case the device interconnection member is subjected to vibrations or impacts.

In contrast, in the device interconnection member described above, the first joined portion of the first conductive member and the second joined portion of the second conductive member are integrally joined by plastic deformation without using welding. This can ensure that the first joined portion and the second joined portion are reliably joined to each other.

(4) Furthermore, the device interconnection member described in (3) may be configured such that the first joined portion of the first conductive member has a first plate-shaped portion having a plate shape, the second joined portion of the second conductive member has a second plate-shaped portion having a plate shape, and the first plate-shaped portion and the second plate-shaped portion overlap each other in a thickness direction, when the thickness direction is defined such that: a direction from the first plate-shaped portion toward the second plate-shaped portion is a first thickness direction, and a direction from the second plate-shaped portion toward the first plate-shaped portion is a second thickness direction, the first plate-shaped portion includes a first swaged portion of a bottomed tube shape protruding in the first thickness direction, the second plate-shaped portion includes a second swaged portion of a bottomed tube shape protruding in the first thickness direction, and the first swaged portion engages with the second swaged portion in the thickness direction and is joined to the second swaged portion to be unremovable from the second swaged portion in the second thickness direction.

In the foregoing device interconnection member, the first joined portion of the first conductive member includes the first plate-shaped portion including the bottomed tube-shaped first swaged portion, and the second joined portion of the second conductive member includes the second plate-shaped portion including the bottomed tube-shaped second swaged portion. Thus, the second swaged portion is in close contact with the outside of the first swaged portion, and the first swaged portion is joined to the second swaged portion to be unremovable from the second swaged portion. Therefore, in joining the first joined portion and the second joined portion, additional parts, such as rivets, are unnecessary, resulting in the reduced number of parts. For joining the first joined portion and the second joined portion, one set or multiple sets of the first swaged portion and the second swaged portion may be provided.

### BRIEF DESCRIPTION OF THE DRAWINGS

FIG. 1 is an explanatory diagram of a battery module assembled using busbars in an embodiment;
FIG. 2 is a top view of a busbar in the embodiment;
FIG. 3 is a cross-sectional view of the busbar in the embodiment, viewed from arrows in FIG. 2;
FIG. 4 is an enlarged cross-sectional view of the busbar in the embodiment, showing a resin seal member and its surrounding in FIG. 3;
FIG. 5 is an enlarged explanatory diagram of a joined area where a first roughened surface (or a second roughened surface) of a first conductive member (or a second conductive member) and a resin seal member are joined;
FIG. 6 is a flowchart of a method for manufacturing the busbar in the embodiment;
FIG. 7 is an explanatory diagram showing how the first conductive member and the second conductive member are joined by swaging using a punch and a die in the busbar manufacturing method in the embodiment; and
FIG. 8 is an explanatory diagram showing how a plurality of first bowl-shaped recesses and first nanocolumns numerously standing on each first bowl-shaped recess (or a plurality of second bowl-shaped recesses and second nanocolumns numerously standing on each second bowl-shaped recess) are formed in the first seal portion of the first conductive member (or a second seal portion of the second conductive member) by scanning a pulsed laser beam in the busbar manufacturing method in the embodiment.

### DETAILED DESCRIPTION OF THE EXEMPLARY EMBODIMENTS

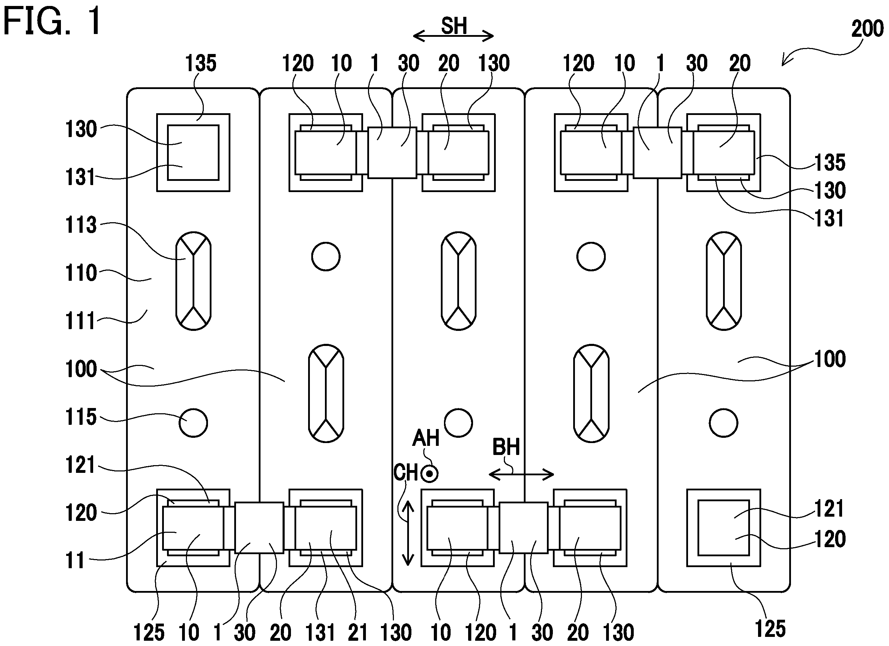

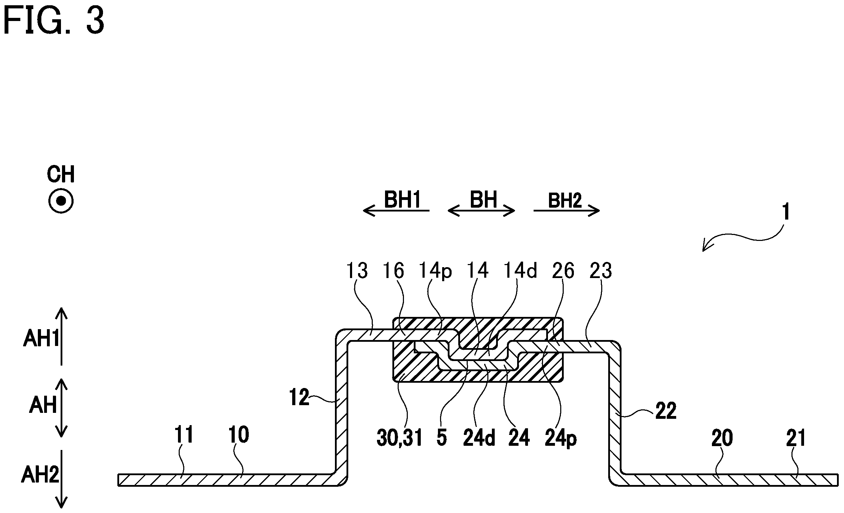

A detailed description of an embodiment of this disclosure will now be given referring to the accompanying drawings. A busbar 1 in the present embodiment, which is one example of a device interconnection member of the disclosure, as shown in FIGs. 1 to 4, is a component for electrically connecting adjacent rectangular (e.g., rectangular prismatic) batteries 100 in a battery module 200 (see FIG. 1) to be mounted in various vehicles, such as a hybrid car, plug-in hybrid car, or an electric car. In the following description, the height direction AH, the long-side direction BH, and the short-side direction CH of the busbar 1 are defined as indicated by arrows in FIGs. 1 to 4.

The battery module 200 includes a plurality of batteries 100 (see FIG. 1). Each of the batteries 100 constituting the battery module 200 is housed in a module case not shown such that the batteries 100 are stacked in a line in the battery thickness direction so as to be alternately oriented in opposite directions, and bound by the module case in the battery stacking direction SH. A positive terminal 120, which is one example of a first electrode terminal of the disclosure, of one of the batteries 100 adjacently arranged and a negative terminal 130, which is one example of a second electrode terminal of the disclosure, of the other battery 100 are aligned in the battery stacking direction SH and electrically connected in series with each other via each busbar 1. The busbar 1 is joined to each of the positive terminal 120 and the negative terminal 130 by welding.

Each battery 100 is composed of a case 110, an electrode body (not shown) including positive and negative electrode plates and an electrolyte (not shown) accommodated in the case 110, a positive terminal 120 and a negative terminal 130 separately supported by the case 110, and others. The case 110 is made of metal (aluminum in the embodiment) and formed in a rectangular prismatic box-like shape. The case 110 is provided, on its upper wall portion 111, with a safety valve 113 that breaks open when the inner pressure of the case 110 exceeds a valve opening pressure. The upper wall portion 111 of the case 110 is provided with a liquid inlet (not shown), which is hermetically sealed with a circular disk-shaped seal member 115 made of aluminum.

On the upper wall portion 111 of the case 110, the positive terminal 120 and the negative terminal 130 are fixedly placed. Specifically, the upper wall portion 111 of the case 110 is provided with a pair of insertion holes (not shown), in one of which the positive terminal 120 made of first metal (aluminum in the embodiment) is inserted and in the other of which the negative terminal 130 made of second metal (copper in the embodiment) dissimilar from the first metal is inserted. The positive terminal 120 is fixed to the upper wall portion 111 of the case 110 via an insert-molded insulation member 125 and the negative terminal 130 is fixed to the same via an insert-molded insulation member 135.

The positive terminal 120 includes a positive top portion 121 of a rectangular plate-like shape located on the outside of the case 110. To this positive top portion 121, the busbar 1 is welded. This positive terminal 120 is conductively connected to a positive current collector part of the electrode body in the case 110. Further, the negative terminal 130 includes a negative top portion 131 of a rectangular plate-like shape located on the outside of the case 110. To this negative top portion 131, the busbar 1 is welded. This negative terminal 130 is conductively connected to a negative current collector part of the electrode body in the case 110.

The busbar 1 will be described below, referring to FIGs. 1 to 5. The busbar 1 includes a first conductive member 10 made of the same first metal (aluminum in the embodiment) as the positive terminal 120, a second conductive member 20 made of the same second metal (copper in the embodiment) as the negative terminal 130, and a resin seal member 30 hermetically sealing a joint portion 5 in which the first conductive member 10 and the second conductive member 20 are joined to each other.

The first conductive member 10 is formed of an aluminum plate that is bent in its thickness direction into a crank shape (a Z shape) having a first connecting portion 11, a first upstanding portion 12, and a first extending portion 13. The first connecting portion 11 has a rectangular plate-like shape extending in the long-side direction BH and the short-side direction CH. This first connecting portion 11 is to be welded to the positive top portion 121 of the positive terminal 120 of the battery 100. The first upstanding portion 12 has a rectangular plate-like shape extending in the height direction AH and the short-side direction CH, which is bent from the end of the first connecting portion 11 on the other side BH2 in the long-side direction BH and upright toward the upper side AH1 in the height direction AH. The first extending portion 13 has a rectangular plate-like shape extending in the long-side direction BH and the short-side direction CH, which is bent from the upper end of the first upstanding portion 12 and extended in parallel to the first connecting portion 11 toward the other side BH2 in the long-side direction BH. This first extending portion 13 includes a first joined portion 14 joined to the second conductive member 20 and a first seal portion 16 located close to the first connecting portion 11 relative to the first joined portion 14. The details of the first joined portion 14 will be described later.

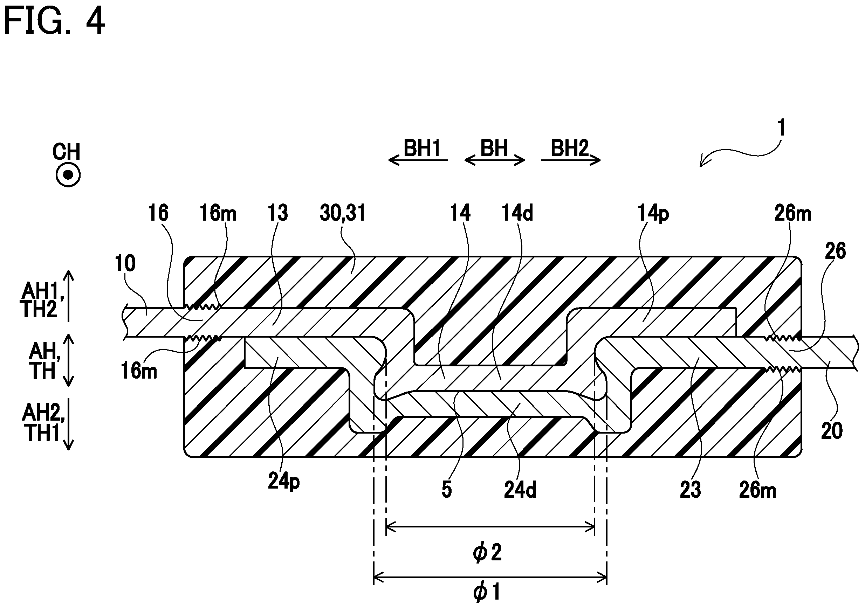

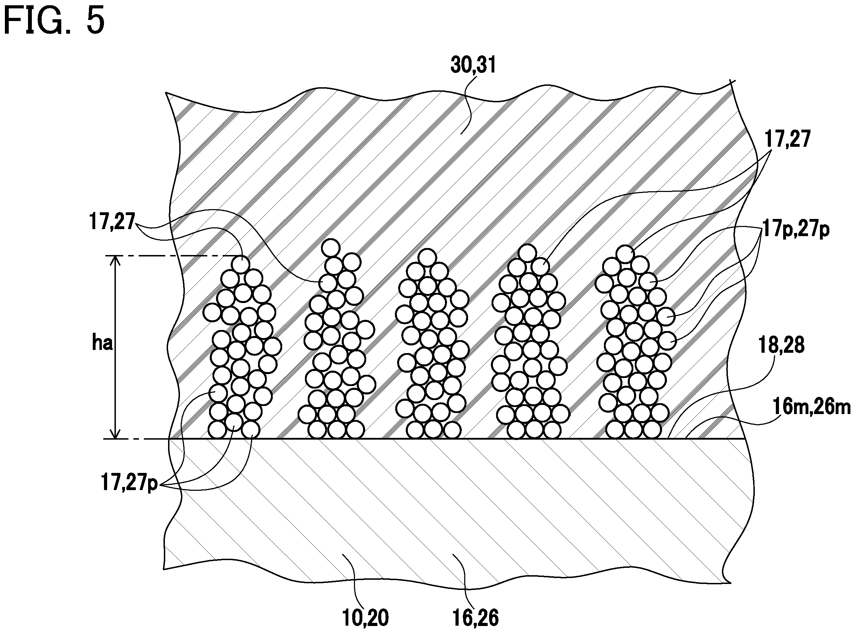

The first seal portion 16 includes a first roughened surface 16m (see FIG. 4) extending in a ring shape over the entire periphery, or perimeter, perpendicular to the long-side direction BH. This first roughened surface 16m is a nano-level roughened surface on which first nanocolumns 17 of a nano level with a height ha of 50 nm or more but less than 1000 nm stand numerously, which are formed of first particles 17p derived from the metal that forms the first conductive member 10 and joined together like strings of beads, as shown in FIG. 5. In the embodiment, the height ha of each first nanocolumn 17 is roughly 200 nm. The metal that forms the first conductive member 10 is aluminum as mentioned above. The first nanocolumns 17 are formed of the first particles 17p made of aluminum and aluminum oxide.

The second conductive member 20 is formed of a copper plate that is bent in its thickness direction into a crank shape (a Z shape), almost similar to the first conductive member 10, having a second connecting portion 21, a second upstanding portion 22, and a second extending portion 23. The second connecting portion 21 has a rectangular plate-like shape extending in the long-side direction BH and the short-side direction CH, and is to be welded to the negative top portion 131 of the negative terminal 130 of the battery 100. The second upstanding portion 22 has a rectangular plate-like shape extending in the height direction AH and the short-side direction CH, which is bent from the end of the second connecting portion 21 on the one side BH1 in the long-side direction BH and upright toward the upper side AH1. The second extending portion 23 has a rectangular plate-like shape extending in the long-side direction BH and the short-side direction CH, which is bent from the upper end of the second upstanding portion 22 and extended in parallel to the second connecting portion 21 toward the one side BH1 in the long-side direction BH. This second extending portion 23 includes a second joined portion 24 joined to the first joined portion 14 of the first conductive member 10 and a second seal portion 26 located close to the second connecting portion 21 relative to the second joined portion 24. The details of the second joined portion 24 will be described later.

The second seal portion 26 includes a second roughened surface 26m (see FIG. 4) extending in a ring shape over the entire periphery, or perimeter, perpendicular to the long-side direction BH. This second roughened surface 26m is also a nano-level roughened surface on which second nanocolumns 27 of a nano level with a height ha of 50 nm or more but less than 1000 nm stand numerously, which are formed of second particles 27p derived from the metal that forms the second conductive member 20 and joined together like strings of beads, as shown in FIG. 5. In the embodiment, the height ha of each second nanocolumn 27 is roughly 200 nm. The metal that forms the second conductive member 20 is copper as mentioned above. The second nanocolumns 27 are formed of the second particles 27p made of copper and copper oxide.

The first joined portion 14 of the first conductive member 10 and the second joined portion 24 of the second conductive member 20 are integrally joined to each other by plastic deformation of at least one, the first joined portion 14 or the second joined portion 24 (in the present embodiment, by plastic deformation of both the first joined portion 14 and the second joined portion 24). The foregoing joint portion 5 indicates an area where the first joined portion 14 and the second joined portion 24 are in close contact with each other.

Specifically, the entire first joined portion 14 is a first plate-shaped portion 14p and the entire second joined portion 24 is a second plate-shaped portion 24p, and the first plate-shaped portion 14p and the second plate-shaped portion 24p overlap one on the other in the thickness direction TH. The thickness direction TH is defined such that the direction from the first plate-shaped portion 14p toward the second plate-shaped portion 24p is a first thickness direction TH1, and the direction from the second plate-shaped portion 24p toward the first plate-shaped portion 14p is a second thickness direction TH2. In the embodiment, the first thickness direction TH1 is toward the lower side AH2 in the height direction AH, and the second thickness direction TH2 is toward the upper side AH1 in the height direction AH.

The first joined portion 14 (i.e., the first plate-shaped portion 14p) includes a first swaged portion 14d of a bottomed tube shape protruding in the first thickness direction TH1. The second joined portion 24 (i.e., the second plate-shaped portion 24p) includes a second swaged portion 24d of a bottomed tube shape protruding in the first thickness direction TH1, tightly contacting from outside with the first swaged portion 14d. To be specific, the first swaged portion 14d has a shape with the outer diameter φ1 on the distal end side (on the first thickness direction TH1 side) larger than the outer diameter φ2 on the proximal end side (on the second thickness direction TH2 side). The second swaged portion 24d in close contact with the first swaged portion 14d has a shape with the inner diameter (equal to the above outer diameter φ1) on the distal end side (on the first thickness direction TH1 side) larger than the inner diameter (equal to the above outer diameter φ2) on the proximal end side (on the second thickness direction TH2 side). Accordingly, the first swaged portion 14d and the second swaged portion 24d engage each other in the thickness direction TH. The first swaged portion 14d is thus joined to the second swaged portion 24d to be unremovable from the second swaged portion 24d in the second thickness direction TH2.

The resin seal member 30 will be described below. This resin seal member 30 has a rectangular parallelepiped outer shape and hermetically coats a part of the first extending portion 13 of the first conductive member 10, which includes the entire first joined portion 14, and a part of the second extending portion 23 of the second conductive member 20, which includes the entire second joined portion 24. Thus, the joint portion 5 in which the first conductive member 10 and the second conductive member 20 are joined is hermetically sealed. The resin seal member 30 is made of resin material 31 containing thermoplastic resin, thermoplastic elastomer, and fibrous filler. In the embodiment, the thermoplastic resin is polyphenylene sulfide (PPS), the thermoplastic elastomer is thermoplastic polyurethane elastomer, and the fibrous filler is glass fiber. The resin seal member 30 is made by insert-molding as mentioned later.

The resin seal member 30 is hermetically joined to the ring-shaped, first roughened surface 16m of the first seal portion 16, as part of the first extending portion 13 of the first conductive member 10. To be concrete, the resin material 31 that forms the resin seal member 30 is filled in gaps between the first nanocolumns 17 standing numerously on the first roughened surface 16m, and the resin seal member 30 is hermetically joined to the first seal portion 16. This configuration can effectively prevent or reduce air or moisture from entering in the resin seal member 30 through the boundary between the first conductive member 10 and the resin seal member 30 and contacting the joint portion 5.

The resin seal member 30 is also hermetically joined to the ring-shaped, second roughened surface 26m of the second seal portion 26, as part of the second extending portion 23 of the second conductive member 20. To be concrete, the resin material 31 that forms the resin seal member 30 is filled in gaps between the second nanocolumns 27 standing numerously on the second roughened surface 26m, and the resin seal member 30 is hermetically joined to the second seal portion 26. This configuration can effectively prevent or reduce air or moisture from entering in the resin seal member 30 through the boundary between the second conductive member 20 and the resin seal member 30 and contacting the joint portion 5.

The busbar 1 in the embodiment is configured such that the resin seal member 30 hermetically seals the joint portion 5 in which the first joined portion 14 of the first conductive member 10 and the second joined portion 24 of the second conductive member 20, made of dissimilar meals, are joined. This can prevent air or moisture from contacting the joint portion 5, and thus corrosion is less likely to occur between the first joined portion 14 and the second joined portion 24.

In the embodiment, furthermore, the first seal portion 16 of the first conductive member 10 is formed with the nano-level first roughened surface 16m with the first nanocolumns 17 numerously standing thereon, and the second seal portion 26 of the second conductive member 20 is formed with the nano-level second roughened surface 26m with the second nanocolumns 27 numerously standing thereon. The resin material 31 is filled in gaps between the first nanocolumns 17 numerously standing on the first roughened surface 16m, hermetically bonding the resin seal member 30 to the first seal portion 16. Further, the resin material 31 is filled in gaps between the second nanocolumns 27 numerously standing on the second roughened surface 26m, hermetically bonding the resin seal member 30 to the second seal portion 26. Thus, the resin seal member 30 covers over the entire first joined portion 14 and second joined portion 24 including the joint portion 5. In this manner, the resin seal member 30 can cover the entirety of the first joined portion 14 and second joined portion 24 including the joint portion 5 with especially high hermeticity, which can more effectively prevent or reduce the occurrence of corrosion between the first joined portion 14 and the second joined portion 24.

Moreover, the first joined portion 14 of the first conductive member 10 and the second joined portion 24 of the second conductive member 20 are integrally joined to each other by plastic deformation of at least one, the first joined portion 14 or the second joined portion 24 (in the present embodiment, by plastic deformation of both the first joined portion 14 and the second joined portion 24), without using welding. This ensures the joining of the first joined portion 14 and the second joined portion 24.

In the embodiment, the first joined portion 14 of the first conductive member 10 has the first plate-shaped portion 14p including the first swaged portion 14d of a bottomed tube shape, and the second joined portion 24 of the second conductive member 20 has the second plate-shaped portion 24p including the second swaged portion 24d of a bottomed tube shape. The second swaged portion 24d is closely attached to the outside of the first swaged portion 14d and also the first swaged portion 14d is joined to the second swaged portion 24d to be unremovable from the second swaged portion 24d. In joining the first joined portion 14 and the second joined portion 24, accordingly, additional parts, such as rivets, are not necessary, and the number of parts can be reduced.

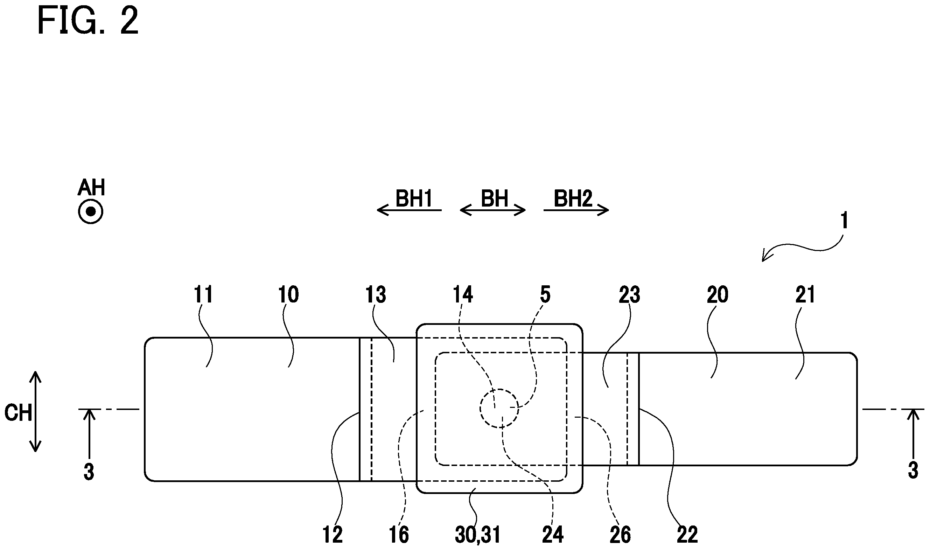

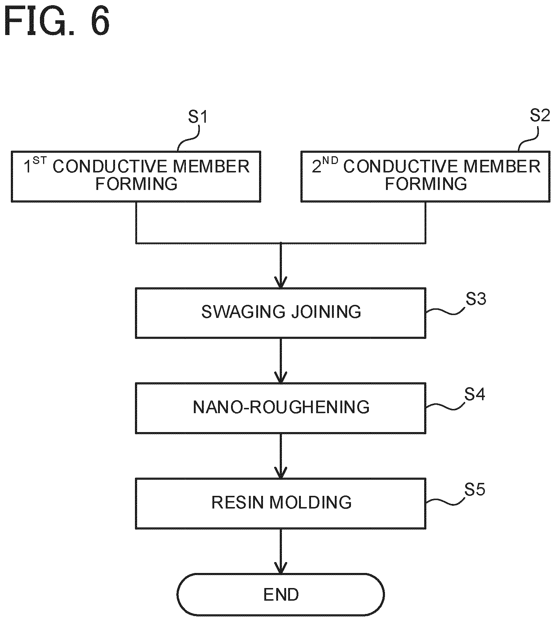

Next, a method for manufacturing the busbar 1 configured as above will be described below, referring to FIGs. 6 to 8. In a first conductive-member forming step S1 (see FIG. 6), firstly, the first conductive member 10 is formed. Specifically, an aluminum plate is cut into a rectangular shape of a predetermined size. Then, this plate is bent in its thickness direction to form the crank-shaped first conductive member 10 including the first connecting portion 11, first upstanding portion 12, and first extending portion 13, as shown in FIGs. 2 to 4.

In a second conductive-member forming step S2, separately, the second conductive member 20 is formed. Specifically, a copper plate is cut into a rectangular shape of a predetermined size. Then, this plate is bent in its thickness direction to form the crank-shaped second conductive member 20 including the second connecting portion 21, second upstanding portion 22, and second extending portion 23, as shown in FIGs. 2 to 4.

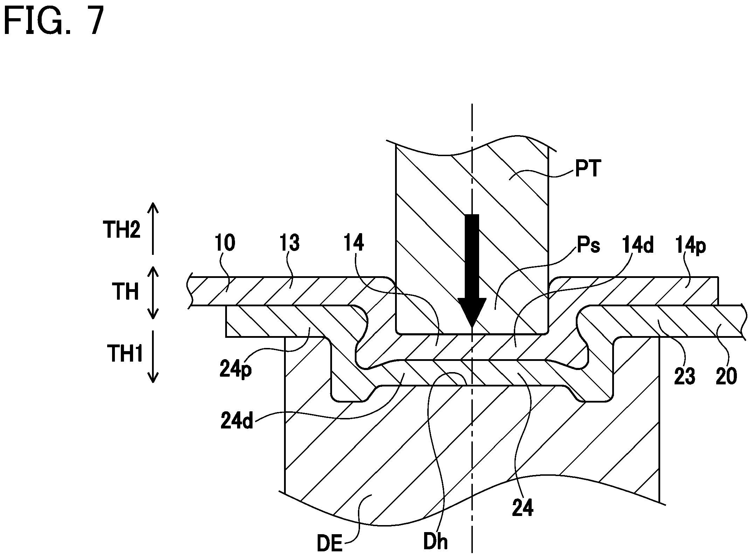

Subsequently, in a swaging-joining step S3 (see FIG. 6), the first extending portion 13 of the first conductive member 10 and the second extending portion 23 of the second conductive member 20 are joined by swaging. This swaging-joining step S3 is performed using a die DE having a recess Dh which is circular in plan view, and a punch PT having a columnar tip part Ps with the outer diameter smaller than the inner diameter of the recess Dh of the die DE (see FIG. 7).

The first extending portion 13 of the first conductive member 10 and the second extending portion 23 of the second conductive member 20, which are unprocessed yet, are placed between the tip part Ps of the punch PT and the recess Dh of the die DE and overlapped one on the other in the thickness direction TH. At that time, the first extending portion 13 of the first conductive member 10 is disposed on the punch PT side and the second extending portion 23 of the second conductive member 20 is disposed on the die DE side. Then, the tip part Ps of the punch PT is moved toward the recess Dh of the die DE, depressing a part of the first extending portion 13 and a part of the second extending portion 23 between the tip part Ps of the punch PT and the recess Dh of the die DE in the first thickness direction TH1 of the thickness direction TH to integrally form those parts. Consequently, the first extending portion 13 is formed with the first plate-shaped portion 14p (the first joined portion 14) having the first swaged portion 14d described above, and the second extending portion 23 is formed with the second plate-shaped portion 24p (the second joined portion 24) having the second swaged portion 24d described above, so that the first conductive member 10 and the second conductive member 20 are conductively connected to each other.

In a nano-roughening step S4 (see FIG. 6), subsequently, the first conductive member 10 and the second conductive member 20, which are joined in the swaging-joining step S3, are subjected to a surface roughening treatment to form the nano-level first roughened surface 16m in the first seal portion 16 of the first conductive member 10 and further the nano-level second roughened surface 26m in the second seal portion 26 of the second conductive member 20.

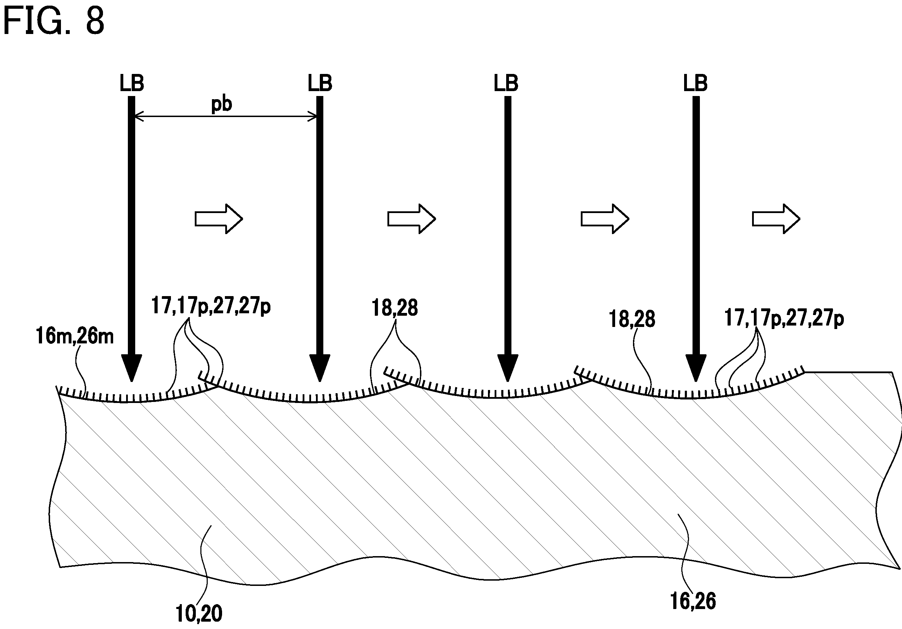

Specifically, a pulsed laser beam LB is intermittently irradiated to the first seal portion 16 of the first conductive member 10 while displacing an irradiation site to form the first roughened surface 16m on which a number of first bowl-shaped recesses 18 each formed with the first nanocolumns 17 numerously standing are arranged as partially overlapping, as shown in FIG. 8. The laser irradiation conditions are set with a wavelength of 1064 nm, a peak output of 5 kW, a pulse width of 150 ns, a pitch pb of 75 µm, and a spot diameter of 80 µm.

At the site of the first seal portion 16, irradiated with the pulsed laser beam LB, the first metal (aluminum in the embodiment) forming the surface and its surrounding is melted and further becomes vapor. Subsequently, when the temperature of the vapor decreases, the vapor turns into the first aluminum or aluminum oxide particles 17p, which are deposited on the first bowl-shaped recesses 18. With the pulsed laser beam LB intermittently irradiated while displacing its irradiation site, the first particles 17p are accumulated and joined together like strings of beads in the form of columns, forming the numerously standing first nanocolumns 17.

Similarly, the pulsed laser beam LB is intermittently irradiated to the second seal portion 26 of the second conductive member 20 while displacing the irradiation site to form the second roughened surface 26m on which a number of second bowl-shaped recesses 28 each formed with the second nanocolumns 27 numerously standing are arranged as partially overlapping. The laser irradiation conditions are set with a wavelength of 1064 nm, a peak output of 20 kW, a pulse width of 50 ns, a pitch pb of 60 µm, and a spot diameter of 75 µm.

At the site of the second seal portion 26, irradiated with the pulsed laser beam LB, the second metal (copper in the embodiment) forming the surface and its surrounding is melted and further becomes vapor. Subsequently, when the temperature of the vapor decreases, the vapor turns into the second copper or copper oxide particles 27p, which are deposited on the second bowl-shaped recesses 28. With the pulsed laser beam LB intermittently irradiated while displacing its irradiation site, the second particles 27p are accumulated and joined together like strings of beads in the form of columns, forming the numerously standing second nanocolumns 27.

In a resin molding step S5 (see FIG. 6), the resin seal member 30 is formed. Specifically, using a forming die (not shown) having an upper die and a lower die, the first conductive member 10 and the second conductive member 20 each having been subjected to the nano-roughening step S4 are placed at a predetermined position in the lower die, and then the upper die is moved toward the lower die, closing the forming die. Subsequently, molten resin derived from melted resin material 31 is injected into a cavity to fill up the cavity. At that time, the molten resin of the resin material 31 is filled in gaps between the first nanocolumns 17 numerously standing on the first roughened surface 16m of the first seal portion 16 of the first conductive member 10 and gap between the second nanocolumns 27 numerously standing on the second roughened surface 26m of the second seal portion 26 of the second conductive member 20, as shown in FIG. 5. Thus, the resin seal member 30 is formed hermetically joining to the first seal portion 16 of the first conductive member 10 and the second seal portion 26 of the second conductive member 20 and hermetically covering the first joined portion 14 of the first conductive member 10 and the second joined portion 24 of the second conductive member 20. In this way, the busbar 1 is completed.

The disclosure is described in the foregoing embodiments, but is not limited thereto. The disclosure may be embodied in other specific forms without departing from the essential characteristics thereof.

### Reference Signs List

- 1: Busbar (Device interconnection member)
- 5: Joint portion
- 10: First conductive member
- 11: First connecting portion
- 14: First joined portion
- 14p: First plate-shaped portion
- 14d: First swaged portion
- 16: First seal portion
- 16m: First roughened surface
- 17: First nanocolumns
- 17p: First particles (constituting first nanocolumns)
- 20: Second conductive member
- 21: Second connecting portion
- 24: Second joined portion
- 24p: Second plate-shaped portion
- 24d: Second swaged portion
- 26: Second seal portion
- 26m: Second roughened surface
- 27: Second nanocolumns
- 27p: Second particles (constituting second nanocolumns)
- 30: Resin seal member
- 31: Resin material
- 100: Battery (Power storage device)
- 120: Positive terminal (First electrode terminal)
- 130: Negative terminal (Second electrode terminal)
- TH: Thickness direction
- TH1: First thickness direction
- TH2: Second thickness direction

## Claims

1. A device interconnection member (1) for connecting a first electrode terminal (120) made of first metal in one power storage device (100) and a second electrode terminal (130) made of second metal in another power storage device (100), the second metal being dissimilar to the first metal,
**characterized in that**
the device interconnection member (1) comprises:
a first conductive member (10) made of the first metal, and including a first connecting portion (11) to be connected to the first electrode terminal (120);
a second conductive member (20) made of the second metal, and including a second connecting portion (21) to be connected to the second electrode terminal (130);
a joint portion (5) in which a first joined portion (14) of first conductive member (10) and a second joined portion (24) of the second conductive member (20) are joined to each other; and
a resin seal member (30) hermetically sealing the joint portion (5).

2. The device interconnection member (1) according to claim 1, wherein
the first conductive member (10) includes a first seal portion (16) located between the first joined portion (14) and the first connecting portion (11),
the first seal portion (16) has a first roughened surface (16m) extending over an entire periphery on which first nanocolumns (17) stand numerously, the first nanocolumns (17) having a height of 50 nm or greater and formed by joining first particles (17p) derived from the first metal that forms the first conductive member (10) like strings of beads into a column shape,
the second conductive member (20) includes a second seal portion (26) located between the second joined portion (24) and the second connecting portion (21),
the second seal portion (26) has a second roughened surface (26m) extending over an entire periphery on which second nanocolumns (27) stand numerously, the second nanocolumns (27) having a height of 50 nm or greater and formed by joining second particles (27p) derived from the second metal that forms the second conductive member (20) like strings of beads into a column shape,
the resin seal member (30) is
hermetically joined to the first seal portion (16) by resin material (31) that forms the resin seal member (30) and filled in gaps between the first nanocolumns (17) numerously standing on the first roughened surface (16m), and
hermetically joined to the second seal portion (26) by the resin material (31) filled in gaps between the second nanocolumns (27) numerously standing on the second roughened surface (26m), and
formed to cover over the first joined portion (14) and the second joined portion (24).

3. The device interconnection member (1) according to claim 1 or 2, wherein the first joined portion (14) of the first conductive member (10) and the second joined portion (24) of the second conductive member (20) are integrally joined to each other by plastic deformation of at least one of the first joined portion (14) and the second joined portion (24).

4. The device interconnection member (1) according to claim 3, wherein
the first joined portion (14) of the first conductive member (10) has a first plate-shaped portion (14p) having a plate shape,
the second joined portion (24) of the second conductive member (20) has a second plate-shaped portion (24p) having a plate shape, and
the first plate-shaped portion (14p) and the second plate-shaped portion (24p) overlap each other in a thickness direction (TH),
when the thickness direction (TH) is defined such that:
a direction from the first plate-shaped portion (14p) toward the second plate-shaped portion (24p) is a first thickness direction (TH1), and
a direction from the second plate-shaped portion (24p) toward the first plate-shaped portion (14p) is a second thickness direction (TH2),
the first plate-shaped portion (14p) includes a first swaged portion (14d) of a bottomed tube shape protruding in the first thickness direction (TH1),
the second plate-shaped portion (24p) includes a second swaged portion (24d) of a bottomed tube shape protruding in the first thickness direction (TH1), and
the first swaged portion (14d) engages with the second swaged portion (24d) in the thickness direction (TH) and is joined to the second swaged portion (24d) to be unremovable from the second swaged portion (24d) in the second thickness direction (TH2).
